# EUROPEAN PATENT APPLICATION

(11) **EP 2 146 479 A1**
(43) Date of publication of application: **20.01.2010**
(21) Application number: 09002949.7
(22) Date of filing: 02.03.2009
(51) Int. Cl.: H04L 29/06

(54) **SIP server and communication system**

(30) Priority: 16.07.2008 JP 2008184861
(71) Applicant: Hitachi, Ltd., Tokyo 100-8280 (JP)
(72) Inventor: Kinoshita, Masafumi, Tokyo 100-8220 (JP); Takeshima, Yoshiteru, Tokyo 100-8220 (JP); Kaji, Tadashi, Tokyo 100-8220 (JP)
(74) Representative: Strehl Schübel-Hopf & Partner

(57) **Abstract**

In order to reduce network loads in a large system, provided is a representative aspect of this invention is as follows. That is, there is provided a SIP server coupled to at least one client via a communication line to control a communication session of the at least one client. The SIP server receives a SIP message transmitted from the at least one client, transfers the received SIP message to one of another SIP server and another one of the at least one client, and analyzes the received SIP message. The SIP server comprising a storage unit for storing a result of the analysis. The SIP server compares the result of the analysis and a SIP message received after the analysis, rewrites the SIP message based on a result of the comparison, and changes a transfer destination of the SIP message based on the result of the comparison.

## Description

### CLAIM OF PRIORITY

The present application claims priority from Japanese patent application 2008-184861 filed on July 16, 2008, the content of which is hereby incorporated by reference into this application.

### BACKGROUND

This invention relates to a SIP server which uses a cache.

Telecommunications carriers are currently at transition from conventional telecom services mainly based on exchanges to next-generation telecom network services called next generation network (NGN). The NGN employs a network protocol called session initiation protocol (SIP) to enable rendering of IP telephone and multimedia services.

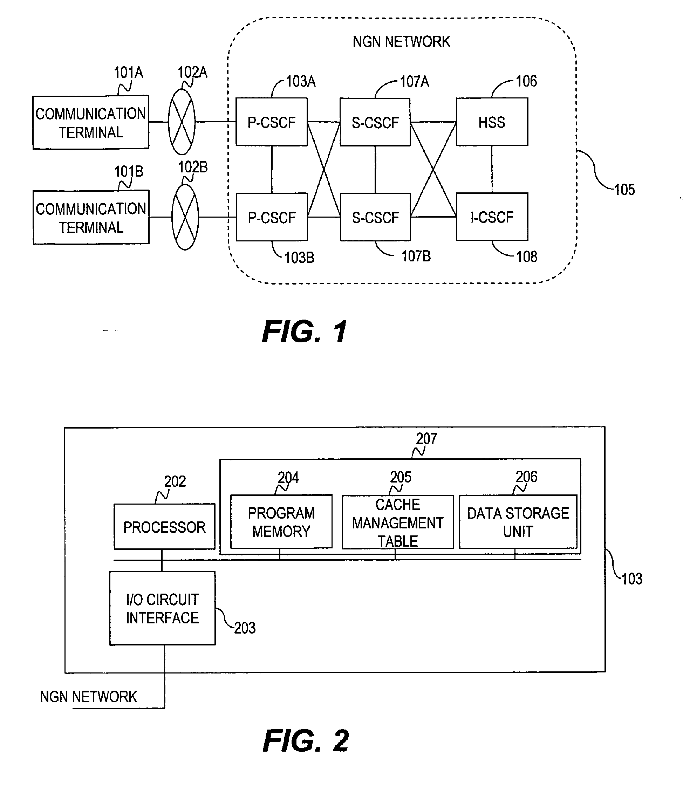

The NGN includes a group of servers and a group of terminals illustrated in FIG. 1. A communication terminal is a terminal such as an IP telephone terminal used by a user. Proxy-CSCF (P-CSCF), interrogating-CSCF (I-CSCF), and serving-CSCF (S-CSCF) are key SIP servers of the NGN. A home subscribe server (HSS) is a database (DB) server for managing a SIP uniform resource identifier (URI) which becomes a telephone number of an IP telephone or an IP address of the communication terminal. The NGN actually includes pluralities of CSCFs and HSSs.

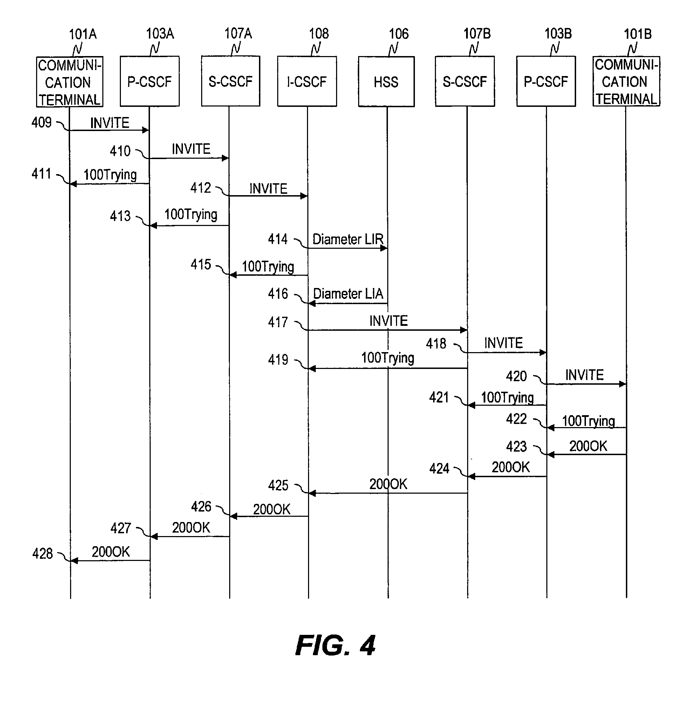

To clarify problems of the NGN, a calling flow of the IP telephone is described below (refer to FIG. 4 for details). Hereinafter, a communication terminal which starts a call is referred to as a calling side, while a communication terminal which receives a call is referred to as a called side.

First, the communication terminal of the calling side transmits a SIP message indicating a start of a call to the P-CSCF. The transmitted SIP message is transferred in order of the P-CSCF of the calling side, the S-CSCF of the calling side, and the I-CSCF of the called side. The I-CSCF asks the HSS for an IP address of the communication terminal of a corresponding node based on a SIP URI of the corresponding node (called side) included in the SIP message. The SIP message is transmitted to the IP address of the communication terminal designated in a response from the HSS via the S-CSCF and the P-CSCF of the called side. As described above, to enable calling between the communication terminals, the calling flow in the NGN always passes through the SIP server group and the HSS.

However, in the NGN, increased calling in the NGN network causes an increase in SIP messages between the CSCFs and inquiry messages to the HSS. As a result, loads are applied on the servers, system performance is reduced, and system failures occur.

To reduce transferring of the SIP message between the CSCFs and the inquiry messages to the HSS described above, for example, there is available a method of storing a SIP URI of the communication terminal and an IP address corresponding to the SIP URI beforehand by the SIP server, and transferring a SIP message to the stored IP address when the SIP server transfers a call from the communication terminal (e.g., refer to JP 2002-271420 A). For example, applying a technology of JP 2002-271420 A to the P-CSCF of FIG. 1 enables call between the communication terminals by transferring the SIP message between the P-CSCFs.

### SUMMARY OF THE INVENTION

In JP 2002-271420 A, the SIP URI and the IP address corresponding to the SIP URI are merely stored (cached). In the case of a large system such as NGN, the caching method of JP 2002-271420 A cannot be applied because the HSS centrally controls correspondence between the SIP URI and the IP address to perform registration, changing or deletion as occasion demands. For example, when information cached by the SIP server is changed by the HSS, the SIP server may transfer the SIP message to a wrong corresponding node unless information of the SIP server matches that of the HSS. Further, the SIP server or the HSS cannot judge how long the information cached by the SIP server can be used.

It is therefore the present invention provides, in order to reduce network loads in a large system such as NGN, in other words, in order to reduce transferring of SIP messages and inquiry messages to HSS, a method of judging cache use of a SIP server, and a transfer method using a cache.

A representative aspect of the disclosed system is as follows. That is, there is provided a SIP server coupled to at least one client via a communication line to control a communication session of the at least one client. The SIP server receives a SIP message transmitted from the at least one client, transfers the received SIP message to one of another SIP server and another one of the at least one client, and analyzes the received SIP message. The SIP server comprising a storage unit for storing a result of the analysis. The SIP server compares the result of the analysis and a SIP message received after the analysis, rewrites the SIP message based on a result of the comparison, and changes a transfer destination of the SIP message based on the result of the comparison.

According to the aspect of disclosed system described above, the SIP server caches information contained in the SIP message, and judges whether or not the cached information is usable. Thus, the transferring of the SIP messages and the inquiry messages to the HSS are reduced to enable prevention of load concentration on each server of the system, whereby the network loads in the large system such as NGN can be reduced.

According to the teaching herein, reduction of the network loads in the large system and suppression of congestion and system failures are enabled.

These and other benefits are described throughout the present specification. A further understanding of the nature and advantages of the invention may be realized by reference to the remaining portions of the specification and the attached drawings.

### BRIEF DESCRIPTION OF THE DRAWINGS

The present invention can be appreciated by the description which follows in conjunction with the following figures, wherein:
FIG. 1 is a block diagram illustrating an example of a schematic configuration of an NGN network in accordance with an embodiment of this invention;
FIG. 2 is a block diagram illustrating a hardware configuration of a P-CSCF in accordance with the embodiment of this invention;
FIG. 3 is an explanatory diagram illustrating a configuration example of a cache management table in accordance with the embodiment of this invention;
FIG. 4 is a sequential diagram illustrating a procedure of establishing a session of SIP of the NGN network in accordance with the embodiment of this invention;
FIG. 5 is a sequential diagram when the P-CSCF uses cache information in accordance with the first embodiment;
FIG. 6 is an explanatory diagram illustrating an example of SIP message transfer processing of the P-CSCF in accordance with the first embodiment;
FIG. 7 is a flowchart illustrating a cache use judgment processing of the P-CSCF in accordance with the first embodiment of this invention;
FIG. 8 is an explanatory diagram illustrating an example of a configuration of an IP packet of a SIP message in accordance with the embodiment of this invention; and
FIGS. 9A and 9B is explanatory diagrams each illustrating examples of cache use judgment from change history of a contact address and a transfer address.

### DETAILED DESCRIPTION OF THE EMBODIMENTS

Referring to the drawings, preferred embodiments of this invention are described below.

FIG. 1 is a block diagram illustrating an example of a schematic configuration of an NGN network according to an embodiment of this invention.

Communication terminals 101A and 101B are IP terminals such as IP telephone terminals used by a user. In this embodiment, the communication terminal 101A is a side which starts a call (call originator is referred to as a calling side hereinafter), while the communication terminal 101B is a side which receives the call (call incoming side is referred to as a called side hereinafter). In the description of this embodiment, reference numerals of the drawings having similar numerals but different tail alphabets as described above are used when devices are similar but used for different purposes. Reference numerals with omitted tail alphabets are used when purposes are not differentiated from each other.

Access gateways 102A and 102B are installed at the end of the NGN network. The communication terminals 101A and 101B are coupled to an NGN network 105 via the access gateways 102A and 102B.

The NGN network 105 includes a group of call session control functions (CSCFs) which are SIP servers, and a home subscriber server (HSS) 106. The CSCF group includes Proxy-CSCFs (P-CSCFs) 103A and 103B, Serving-CSCFs (S-CSCFs) 107A and 107B, and an Interrogating-CSCF (I-CSCF) 108. Pluralities of CSCF groups and HSSs 106 are installed, and classified into groups based on installing bases such as the access gateway 102A and the P-CSCF 103A.

The P-CSCF 103A is a SIP server of a calling side with which the communication terminal 101A first contacts, and which communicates with the S-CSCF 107A and I-CSCF 108. Similarly, the P-CSCF 103B is a P-CSCF of a called side.

The S-CSCF 107 is a central SIP server of execution session control of call services, where the S-CSCF 107A belongs to the same calling side as that of the P-CSCF 103A, and the S-CSCF 107B belongs to the same called side as that of the P-CSCF 103B. The S-CSCFs 107A and 107B include means for making inquiries to the HSS based on a SIP message received from the communication terminal, and obtaining information such as an IP address of the communication terminal which is a SIP message destination from the HSS. The S-CSCF 107 includes means for associating with an application server (AS) (not shown).

The I-CSCF 108 includes means for receiving a SIP message from an NGN network of another telecommunications house and assigning processing to an appropriate S-CSCF in its own NGN network based on information from the called side, and means for obtaining user information from the HSS. The HSS 106 is a database for processing user information, and manages pieces of information such as a SIP URI which is a telephone number in the NGN network, an IP address of the communication terminal, positional information of a user, information of services for which the user has a contract, and security information such as authentication. In the actual NGN network, when a plurality of HSSs are installed, a subscriber location function (SLF) for selecting an HSS is provided. However, this function is omitted in this embodiment.

A first embodiment is directed to a case where this invention is applied to the P-CSCF 103. A case where this invention is applied to the S-CSCF 107 and the I-CSCF 108 is described in a second embodiment.

The first embodiment assumes an NGN network of one telecommunications house. However, this invention can be applied even among NGN networks of a plurality of telecommunications houses. In other words, this invention can be applied to a CSCF independently irrespective of NGN networks of telecommunications houses. This embodiment is directed to the CSCF of the NGN network. However, this invention can be applied to a SIP server in a large network such as the Internet.

FIG. 2 is a block diagram illustrating a hardware configuration of the P-CSCF 103 according to the embodiment of this invention.

The P-CSCF 103 includes a processor 202, a storage device 207, and an I/O circuit interface 203 for transmitting/receiving data to/from the NGN network, which are interconnected via an internal bus.

The storage device 207 includes a semiconductor memory device or an external storage device such as a hard disk. The storage device 207 stores a program memory 204, a cache management table 205, and a data storage unit 206.

The program memory 204 stores various control programs for realizing the P-CSCF 103. The processor 202 executes the programs stored in the program memory 204.

The program memory 204 stores data used by the programs. Each program may be stored beforehand in the program memory 204, or loaded to the program memory 204 via a detachable storage medium or communication medium (network or carrier wave propagating through the network) (not shown).

The cache management table 205 stores information extracted from a SIP message received by the P-CSCF 103. However, in addition to the arrangement where the P-CSCF 103 obtains data, and the obtained data is stored in the cache management table 205, data may be obtained from the external storage medium via the communication medium (network or carrier wave propagating through the network) to be stored in the cache management table 205.

The data storage unit 206 stores information other than pieces of information stored in the program memory 204 and the cache management table 205.

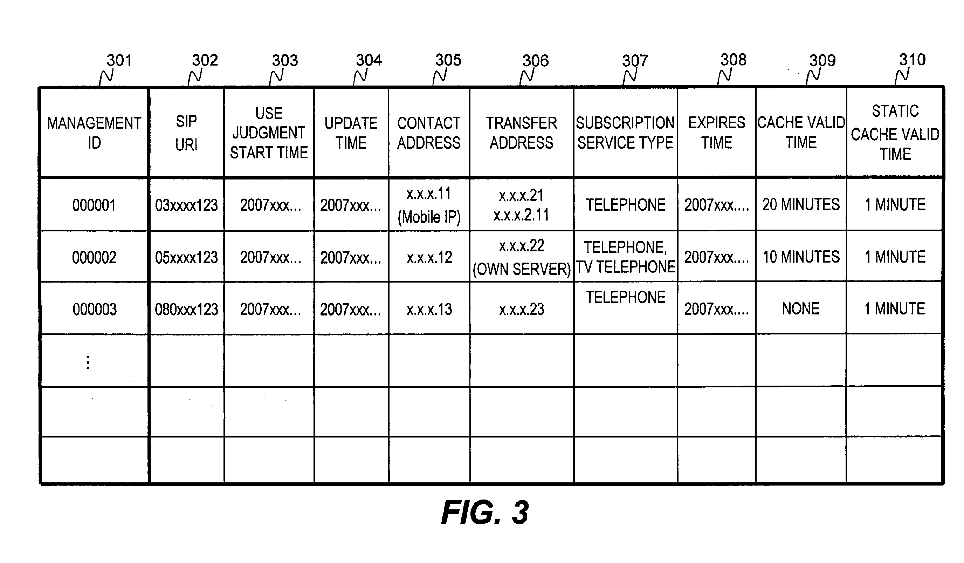

FIG. 3 illustrates a configuration example of the cache management table 205 according to the embodiment of this invention.

The cache management table 205 is a table for managing a SIP URI, an IP address of the communication terminal 101, and other pieces of SIP message information (cache information hereinafter).

Entries of the cache management table 205 include a management ID 301, a SIP URI 302, use judgment start time 303, update time 304, a contact address 305, a transfer address 306, a subscription service type 307, Expires time 308, cache valid time 309, and static cache valid time 310.

The management ID 301 is an identifier for managing the cache management table 205. Each data is stored for one entry of the management ID 301 to manage the cache management table 205.

The SIP URI 302 is an identifier for uniquely identifying a user included in a SIP message.

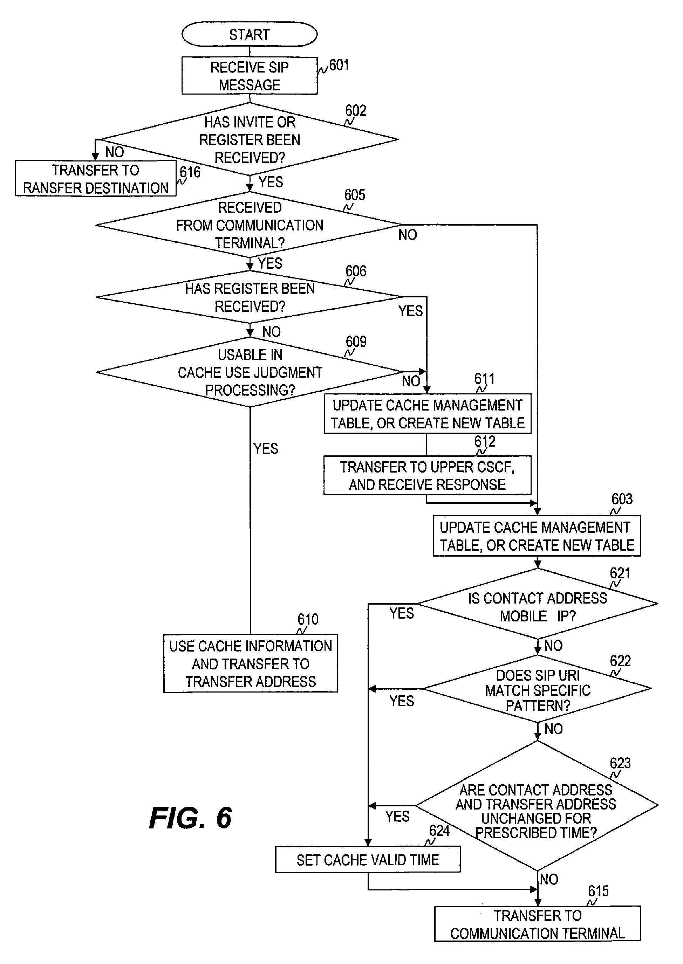

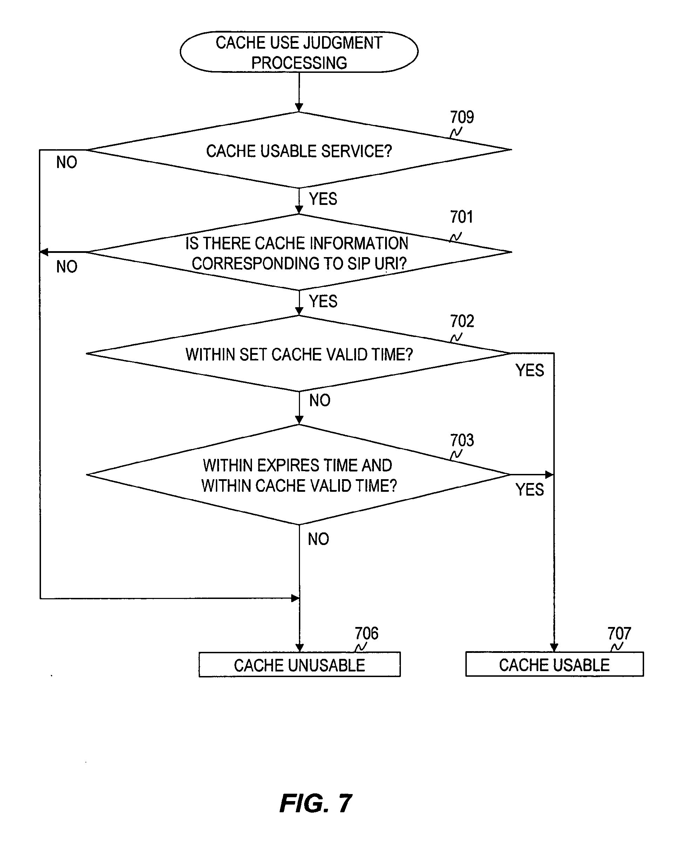

The use judgment start time 303 is time when the P-CSCF 103 creates an entry or updates entry information. The P-CSCF 103 starts judgment as to whether stored cache information is usable at the use judgment start time 303. The judgment as to whether the cache information is usable is described below referring to FIGS. 6 and 7.

The update time 304 is time when the P-CSCF 103 updates the cache management table 205. The cache management table 205 is updated when a SIP message is received. When a SIP message is received, and the cache management table 205 is updated based on received data, even if data to be stored is identical to data before updating, the time of receiving the SIP message is stored.

The contact address 305 is an IP address of the communication terminal 101 corresponding to the SIP URI 302.

The transfer address 306 is an IP address of a P-CSCF 103, an S-CSCF 107 or an I-CSCF 108 corresponding to the contact address 205. The transfer address 306 can store IP addresses of a plurality of CSCFs. When IP addresses of the plurality of CSCFs have been stored, a SIP message is transferred preferentially from the upper CSCF. When transfer to the upper CSCF fails, the SIP message is transferred to a next upper CSCF.

The subscription service type 307 indicates a type of a service which the user of the communication terminal 101 subscribes to, such as an IP telephone or a TV telephone

The Expires time 308 indicates addition of time represented by an Expires header contained in a SIP message of REGISTER which is a SIP command to current time, defining time indicating whether the P-CSCF 103 can use cache information, in other words, a maximum expiration date of the cache information. Cache information that has passed preset prescribed time is deleted.

The cache valid time 309 indicates how long the cache information can be used from the update time 304 when the P-CSCF 103 can use the cache information. In other words, the cache valid time 309 defines an expiration date of the cache information. The cache valid time 309 is dynamically changed by a received SIP message. A value of the cache valid time 309 is equal to or lower than the Expires time 308.

The static cache valid time 310 is configured time indicating, when the P-CSCF 103 uses the cache information, how long the cache information is usable after the reception of the SIP message. The static cache valid time 310 takes a static value while the value of the cache valid time 309 is dynamically changed. In the static cache valid time 310, a value smaller than that of the cache valid time 309 is set.

In addition to the above-mentioned items, the cache management table 205 may include information regarding congestion of a CSCF group for transferring the SIP message, such as the number of timing-out times after transmission of the SIP message or a transfer failure.

FIG. 4 is a sequential diagram illustrating a procedure of establishing a session of SIP of the NGN network. FIG. 4 illustrates a normal procedure when no cache information is used.

Referring to FIG. 4, a sequence among the communication terminals 101A and 101B, the P-CSCFs 103A and 103B, the S-CSCFs 107A and 107B, the I-CSCF 108, and the HSS 106 illustrated in FIG. 1 is described.

In FIG. 4, INVITE indicates a command for establishing a session, 100Trying and 200OK indicate response codes of a SIP message, and Diameter indicates a message of Diameter which is an authentication protocol. Processing of the I-CSCF 108 and the S-CSCF 107 of FIG. 4 may be carried out alternatively by other CSCFs, and order of transfer processing may vary. However, the P-CSCF 103 of this embodiment is not affected when the other CSCF perform the processing in place of the I-CSCF 108 and the S-CSCF 107.

First, the communication terminal 101A transmits INVITE 409 to the P-CSCF 103A of the calling side. The P-CSCF 103A that has received the INVITE 409 transfers INVITE 410 to the S-CSCF 107A of the calling side, and transmits 100Trying 411 to the communication terminal 101A.

The S-CSCF 107A that has received the INVITE 410 transfers INVITE 412 to the I-CSCF 108 of the called side, and transmits 100Trying 413 to the P-CSCF 103A.

The I-CSCF 108 that has received the INVITE 412 transmits Diameter location-information-request (LIR) 414 containing a SIP URI of an arrival destination of the received SIP message to the HSS 106. The I-CSCF 108 transmits 100Trying 415 to the S-CSCF 107A.

The HSS 106 that has received the Diameter LIR 414 transmits Diameter location-information-answer (LIA) 416 containing information of a transfer destination (S-CSCF 107B in this case) as a response to the I-CSCF 108.

The I-CSCF 108 that has received the Diameter LIA 416 transfers INVITE 417 to the S-CSCF 107B of the called side based on the information of the transfer destination contained in the Diameter LIA 416.

The S-CSCF 107B that has received the INVITE 417 transfers INVITE 418 to the P-CSCF 103B of the called side, and transmits 100Trying 419 to the I-CSCF 108.

The P-CSCF 103B that has received the INVITE 418 transfers INVITE 420 to the communication terminal 101 B, and transmits 100Trying 421 to the S-CSCF 107B.

The communication terminal 101B that has received the INVITE 420 transmits 100Trying 422 to the P-CSCF 103B. After completion of series of transfer operations of the SIP message from the communication terminal 10 1A to the communication terminal 101B described above, the communication terminal 101B calls the user. After the series of operations described above, 180Ringing indicating a status of calling the user, or 183Session Progress for reserving resources of the NGN network may be transferred from the communication terminal 101B to the communication terminal 101A via each CSCF. However, description thereof is omitted for simplicity. A response sequence for session establishment is described below.

The communication terminal 101B transmits 2000K 423 to the P-CSCF 103B. The P-CSCF 103B that has received the 200OK 423 transfers 2000K 424 to the S-CSCF 107B.

The 200OK 424 transferred to the S-CSCF 107B is then transferred to the I-CSCF 108, the S-CSCF 107A, the P-CSCF 103A, and the communication terminal 101A in order. A SIP session is established when the communication terminal 101A receives 200OK 428. In other words, call is enabled between the communication terminals 101A and 101B, whereby audio data can be exchanged between the communication terminals 101A and 101B.

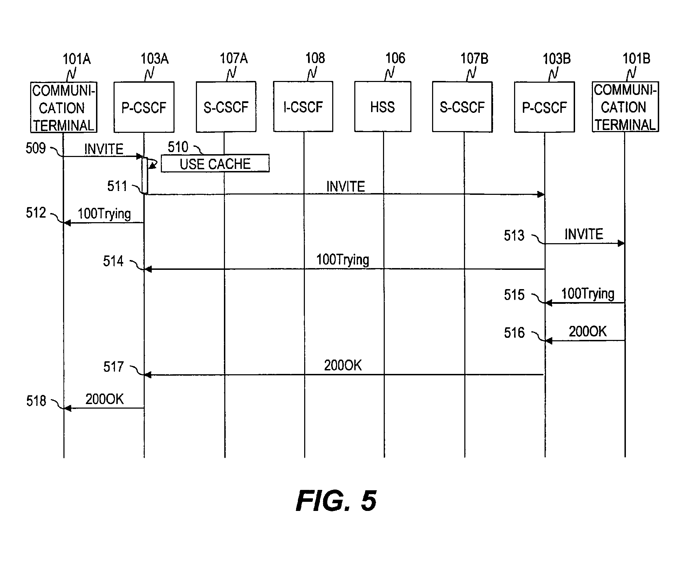

FIG. 5 is a sequential diagram when the P-CSCF 103 uses the cache information according to the first embodiment.

First, the communication terminal 101A transmits INVITE 509 to the P-CSCF 103A of the calling side.

The P-CSCF 103A that has received the INVITE 509 transfers INVITE 511 to the P-CSCF 103B of the called side by using cache information (Step 510). Details of processing using cache information are described below with reference to FIG. 6.

The P-CSCF 103B that has received the INVITE 511 transfers INVITE 513 to the communication terminal 101B, and transmits 100Trying 514 to the P-CSCF 103A.

The communication terminal 101B that has received the INVITE 513 transmits 100Trying 515 to the P-CSCF 103B.

After completion of the series of SIP message transfer operations from the communication terminal 101A to the communication terminal 101B described above, the communication terminal 101B calls the user. In this embodiment, after the series of operations described above, 180Ringing indicating a status of calling the user, or 183Session Progress for reserving resources of the NGN network may be transmitted from the communication terminal 101B to the communication terminal 101A. However, description thereof is omitted for simplicity. A response sequence for session establishment is described below.

The communication terminal 101B transmits 200OK 516 to the P-CSCF 103B.

The P-CSCF 103B that has received the 2000K 516 transfers 200OK 517 to the P-CSCF 103A. The 200OK 517 transferred to the P-CSCF 103A is then transferred to the communication terminal 101A. A SIP session is established when the communication terminal 101A receives 200OK 518. In other words, call is enabled between the communication terminals 101A and 101B, whereby audio data can be exchanged between the communication terminals 101A and 101B.

Processing when the P-CSCF 103 uses the cache information is described below.

FIG. 6 illustrates an example of SIP message transfer processing of the P-CSCF 103 according to the first embodiment.

INVITE is a command for establishing a session. REGISTER is a command for registering the IP address of the communication terminal 101 and the SIP URI in the HSS 106 or the S-CSCF 107 by the communication terminal 101.

In FIG. 6, functions normally set in the P-CSCF of the NGN network, such as normalcy checking of a SIP message, authentication, SIP message compression, and changing or addition of a header such as Request-URI or Via in the SIP message are omitted for simplicity.

First, the P-CSCF 103 receives a SIP message from the communication terminal 101, the S-CSCF 107 or the I-CSCF 108 (Step 601).

The P-CSCF 103 judges whether the received SIP message is INVITE/REGISTER (Step 602). In Step 602, the P-CSCF 103 judges whether the received SIP message contains information to be cached. If the SIP message is not INVITE/REGISTER, the P-CSCF 103 carries out no processing for caching as in the case of the normal P-CSCF function, and transfers the SIP message to a transfer destination (Step 616).

If it is judged in Step 602 that the SIP message is INVITE/REGISTER, the P-CSCF 103 judges whether the SIP message has been transmitted from the communication terminal 101 (Step 605). In Step 605, it is judged which of a P-CSCF 103A of the calling side and a P-CSCF 103B of the called side the P-CSCF is to have received the SIP message.

If it is judged that the SIP message has not been transmitted from the communication terminal 101, the P-CSCF has received the SIP message as the P-CSCF 103 of the called side (P-CSCF 103B). Thus, the P-CSCF 103 obtains cache information to update the cache management table 205. If there is no cache information, a new cache management table 205 is created (Step 603).

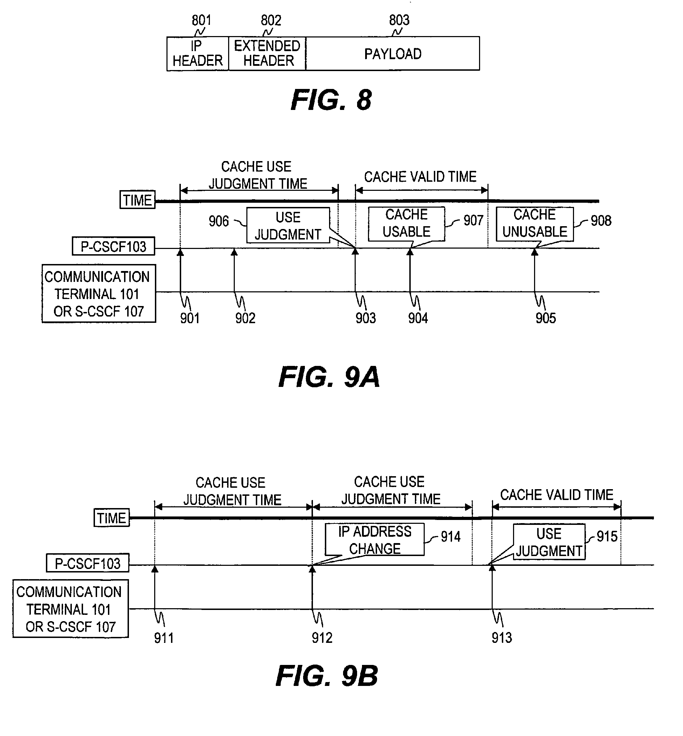

In Step 603, the P-CSCF 103 stores cache information based on SIP URIs of both calling and called sides. Even when the transfer address 306 is a P-CSCF 103 itself (own server), information is stored in the cache management table 205. Specifically, the P-CSCF 103 can obtain a SIP URI 302, a contact address 305, and a transfer address 306 from the received SIP message, and Expires time 308 when the SIP message is REGISTER. The P-CSCF 103 stores use judgment start time 303, and time when the P-CSCF 103 updates the cache management table 205 as update time 304 (refer to FIGS. 9A and 9B for details).

After Step 603, the P-CSCF 103 judges whether a contact address 305 corresponding to the SIP URI of the called side contained in the SIP message is Mobile IP (Step 621). The judging method of Step 621 is described below referring to FIG. 8. The Mobile IP is an IP address added to uniquely identify a communication terminal even when a communication network changes.

If the contact address 305 is judged to be Mobile IP, the P-CSCF 103 sets cache valid time 309 to store the cache valid time 309 thus set in the cache management table 205 (Step 624). When the contact address 305 is Mobile IP, a possibility of IP address changing is low. Thus, the P-CSCF 103 is permitted to use the cache information for a certain period, and hence cache valid time 309 is set.

If it is judged that the contact address 305 is not Mobile IP, the P-CSCF 103 judges whether the SIP URI matches a specific pattern (Step 622). Specifically, the specific pattern of the SIP URI of Step 622 is a pattern indicating an attribute of the SIP URI (telephone number) such as a number starting from 050 or 03XXXX, and preset in the P-CSCF 103. The P-CSCF 103 judges whether the SIP URI matches the specific pattern based on the cache management table 205 and a preset attribute pattern of the SIP URI.

If it is judged that the SIP URI matches the specific pattern, the P-CSCF 103 sets cache valid time 309 to store the cache valid time 309 thus set in the cache management table 205 (Step 624). For example, when a pattern of the SIP URI is a fixed terminal, a possibility of changing of an IP address is low. Thus, the P-CSCF 103 is permitted to use cache information for a certain period, and hence cache valid time 309 is set.

If it is judged that the SIP URI does not match the specific pattern, the P-CSCF 103 refers to the contact address 305 and the transfer address 306 to judge whether the contact address 305 and the transfer address 306 have been changed within a prescribed period of time (cache use judgment time illustrated in FIGS. 9A and 9B) preset in the P-CSCF 103 (Step 623).

If it is judged that neither the contact address 305 nor the transfer address 306 has been changed within the prescribed period of time preset in the P-CSCF 103, the P-CSCF 103 sets cache valid time 309 to store the cache valid time 309 thus set in the cache management table 205 (Step 624). If it is judged that neither the contact address 305 nor the transfer address 306 has been changed within the prescribed period of time preset in the P-CSCF 103, a possibility of changing of an IP address is low. Thus, the P-CSCF 103 is permitted to use the cache information for a certain period, and hence cache valid time 309 is set.

If it is judged that the contact address 305 and the transfer address 306 have been changed within the prescribed period of time preset in the P-CSCF 103, the P-CSCF 103 transfers a SIP message to the communication terminal to finish the processing (Step 615).

If all the judgments of Steps 621, 622 and 623 are "NO", no cache valid time is set. Thus, when permitted to use the cache, the P-CSCF can use the cache only for a short period of time of the set cache valid time 310 from the reception of the SIP message.

The cache valid time set in Steps 621, 622 and 623 may vary from one step to another.

If it is judged in Step 605 that the received SIP message has been transmitted from the communication terminal 101, the P-CSCF 103 has received the SIP message as a P-CSCF 103 of the calling side (P-CSCF 103A). Then, the P-CSCF 103 judges whether the received SIP message is REGISTER (Step 606).

If it is judged that the received SIP message is REGISTER, the P-CSCF 103 starts updating of the cache management table or creation of a new table (Step 611), transfers a SIP message (REGISTER in this case) to the upper CSCF, and receives its response (Step 612) to proceed to Step 603. In Step 611, the P-CSCF 103 can obtain a SIP URI 302 and Expires time 308 from the received REGISTER. The P-CSCF 103 stores use judgment start time 303 and update time 304 (described below in detail referring to FIGS. 9A and 9B).

After Step 612, the P-CSCF 103 waits for a response issued from the communication terminal 101B of the called side (200OK 427 or 183Session Progress of FIG. 4), and executes, after reception of the response issued from the communication terminal 101B of the called side, processing of Step 603 and thereafter.

If it is judged that the received SIP message is not REGISTER, in other words, it is judged that the received SIP message is INVITE, the P-CSCF 103 performs cache use judgment processing as to whether or not the cache information stored in the cache management table 205 is usable (Step 609). The cache use judgment processing is described below referring to FIG. 7.

If it is judged that the cache information is unusable, the P-CSCF 103 executes processing of Steps 611 to 615. In this case, in Step 612, the P-CSCF 103 transfers INVITE, but does not execute processing of Step 603 and subsequent steps until reception of a response (200OK 427 or 183Session Progress of FIG. 4) from the communication terminal 101B of the called side. When 100Trying is received in Step 612, the 100Trying contains no information to be cached in the message, and thus the P-CSCF 103 stands by in status of Step 612 until reception of a response from the communication terminal 101B of the called side.

If it is judged that the cache information is usable, the P-CSCF 103 uses the cache information, in other words, the contact address 305 of the cache management table 205 to rewrite Request-URI and other headers of the SIP message (INVITE), and transfers the rewritten SIP message to the transfer address 306 (Step 610).

When there is a plurality of the transfer addresses 306, the SIP message is transferred to a preferential IP address. If transferring of the SIP message to the preferential IP address fails, the SIP message is transferred to a next IP address. A sequence when the P-CSCF 103 uses the cache information is illustrated in FIG. 5, while a sequence when the P-CSCF 103 does not use any cache information is illustrated in FIG. 4.

FIG. 7 is a flowchart illustrating the cache use judgment processing of the P-CSCF 103 according to the first embodiment of this invention.

First, the P-CSCF 103 judges whether or not services currently used by the communication terminal (communication terminal 101A in this case) which has transmitted a SIP message (INVITE) are cache-usable services (Step 709). Specifically, the P-CSCF 103 refers to information regarding services contained in the SIP message to judge whether or not the services are cache-usable services.

In the NGN, there are available services supplied by association between the S-CSCF 107 and the AS. When the cache is used between the P-CSCFs 103 to skip the S-CSCF 107 as illustrated in FIG. 4, the services supplied by the association between the S-CSCF 107 and the AS cannot be used any more. Thus, in Step 709, whether or not the services designated in the SIP message are cache-usable services by the P-CSCF 103 is judged. When the cache has to be preferentially used in emergency, the fixed terminal can be judged to be a preferentially cache-usable service. For the aforementioned reason, in Step 709, the P-CSCF 103 judges whether or not the services currently used by the communication terminal 101A are cache-usable services.

If it is judged that the services are not cache-usable services, the P-CSCF 103 is inhibited from using the cache (Step 706). If it is judged that the services are cache-usable services (e.g. IP telephone services), the P-CSCF 103 judges whether or not cache information corresponding to a called side SIP URI contained in the SIP message has been stored in the cache management table 205 (Step 701). Having referred to the called side SIP URI contained in the SIP message to judge that no cache information corresponding to the SIP URI has been stored in the cache management table 205, the P-CSCF 103 is inhibited from using the cache (Step 706).

If it is judged that the cache information corresponding to the called side SIP URI contained in the SIP message has been stored in the cache management table 205, the P-CSCF 103 judges whether or not the processing is within the set cache valid time 310 after its reception of the SIP message (Step 702). Step 702 is processing normally carried out in the processing of using the cache. If it is judged that the processing is within the set cache valid time 310, the P-CSCF 103 is permitted to use the cache (Step 707).

If it is judged that the processing is not within the set cache valid time 310, the P-CSCF 103 judges whether or not the processing is within the Expires time 308 and within the cache valid time 309 (Step 703). If it is judged that the processing is within the Expires time 308 and within the cache valid time 309, the P-CSCF 103 is permitted to use the cache (Step 707). If it is judged that the processing is neither within the Expires time 308 nor within the cache valid time 309, the P-CSCF 103 is inhibited from using the cache (Step 706).

FIG. 8 illustrates an example of a configuration of an IP packet of the SIP message.

FIG. 8 illustrates an IP packet IPv6 (IP version 6) which includes an IP header 801, an extended header 802, and a payload 803. The IP header 801 is a standard header in which an IP address or the like is written. The extended header 802 is not normally added, but used for special purposes. The payload 803 indicates data of IP layer and more including a SIP message.

If an IP packet containing the SIP message received by the P-CSCF 103 is Mobile IP, the extended header 802 is a destination option header and an option type of the extended header 802 is 201, or the extended header 802 is a routing header of a destination option header type 2. Thus, with the aforementioned configuration, the P-CSCF 103 can judge whether or not the IP packet is Mobile IP by judging whether or not the IP packet containing the received SIP message includes the above-mentioned characteristics.

For judgment as to whether or not the IP packet is Mobile IP, a method may be employed for making judgment by an operation system (OS), another device or a program, obtaining its result by the P-CSCF 103, and making judgment based on the obtained result by the P-CSCF 103.

The P-CSCF 103B of the called side may judge that the IP packet is Mobile IP, and transmit the SIP message containing information indicating that the IP packet is Mobile IP. The P-CSCF 103A may obtain the information that the IP packet is Mobile IP from the SIP message.

FIGS. 9A and 9B illustrate examples of cache use judgment from change history of a contact address and a transfer address.

Points 901 to 905 of FIG. 9A and points 911 to 913 of FIG. 9B indicate that the P-CSCF 103 has received SIP messages of REGISTER or INVITE from the communication terminal 101 or the S-CSCF 107 and its response, and that the P-CSCF 103 updates the cache management table 205 or creates a new table.

First, at the point 901, the P-CSCF 103 stores new cache information in the cache management table 205, and time of this point in the use judgment start time 303. If a SIP message received at the point 901 is REGISTER, the P-CSCF 103 also stores Expires time 308.

At the point 902, the P-CSCF 103 transfers a SIP message as in the normal case to update the update time 304. At the point 903, cache use judgment time preset in the P-CSCF 103 has passed from the use start time 303, and the contact address 305 has not been changed within the cache use judgment time. Thus, the P-CSCF 103 sets cache valid time 309 (906). If the processing is within the cache valid time 309 and within the Expires time 308 (ignored if not has been set) at the point 904, the P-CSCF 103 uses the cache (907). The cache valid time 309 has not passed at the point 905, and hence the P-CSCF 103 does not use any cache information (908).

FIG. 9B is described below. Upon reception of a signal at the point 911, the P-CSCF 103 stores new cache information in the cache management table 205, and time of this point in the use judgment start time 303. If the received message is REGISTER at the point 911, the P-CSCF 103 registers Expires time 308.

The P-CSCF 103 detects that the contact address 305 has been changed at the point 912 (914) to update information of the table, and to store time of this point in the use judgment start time 303. The cache use judgment time is released once, and cache use judgment time is set again from this point of time. If the processing is within the cache valid time 309 and within the Expires time 308 (ignored if not have been set) of the cache management table 205 at the point 913, the P-CSCF 103 uses the cache (915).

A second embodiment of this invention is described below.

The second embodiment is directed to a case where this invention is applied to the S-CSCF 107. This embodiment is applicable to the I-CSCF 108. Referring to FIGS. 2 and 5, differences of the second embodiment from the first embodiment are described.

In FIG. 2, in the second embodiment, a P-CSCF 103 and an S-CSCF 107 are similar in configuration, and a program memory 204 includes a basic function of the S-CSCF 107 and a transfer function of this invention.

In FIG. 5, in the second embodiment, cache use (Step 510), in other words, cache use judgment, is carried out by the S-CSCF 107. When a cache is used, the S-CSCF 107 transfers INVITE 511 to a transfer destination, and receives 100Trying 514 or 2000K 517 from the transfer destination to transfer it to a communication terminal 101A. When the cache information is used, the transfer destination is determined by referring to a transfer address 306. If there are a plurality of transfer destinations, an upper CSCF takes priority for transfer.

According to the embodiments described above, the SIP server caches information contained in the SIP message, and judging whether the cached information is usable enables realization of reduction of loads on a network in a large system such as the NGN. Valid time of cache information is set, and hence erroneous calling caused by use of old cache information can be suppressed.

While the present invention has been described in detail and pictorially in the accompanying drawings, the present invention is not limited to such detail but covers various obvious modifications and equivalent arrangements, which fall within the purview of the appended claims.

## Claims

1. A SIP server coupled to at least one client via a communication line to control a communication session of the at least one client,
the SIP server being configured to:
receive a SIP message transmitted from the at least one client;
transfer the received SIP message to one of another SIP server and another one of the at least one client; and
analyze the received SIP message,
the SIP server comprising a storage unit for storing a result of the analysis, and
the SIP server being further configured to:
compare the result of the analysis and a SIP message received after the analysis;
rewrite the SIP message based on a result of the comparison; and
change a transfer destination of the SIP message based on the result of the comparison.

2. The SIP server according to claim 1, being further configured to:
judge whether an IP address included in the received SIP message is a mobile IP when the result of the analysis and the SIP message received after the analysis are compared; and
set valid time during which information stored in the storage unit is usable in a case of which it is judged that the IP address included in the received SIP message is the mobile IP.

3. The SIP server according to claim 1, being further configured to:
judge whether a SIP URI included in the received SIP message matches a specific pattern when the result of the analysis and the SIP message received after the analysis are compared; and
set valid time during which information stored in the storage unit is usable in a case of which it is judged that the SIP URI contained in the received SIP message matches the specific pattern.

4. The SIP server according to claim 1, wherein:
the storage unit for storing the result of the analysis stores a SIP URI and an IP address of the at least one client included in the SIP message as the result of the analysis; and
the SIP server is further configured to:
judge whether the SIP URI of the at least one client included in the received SIP message matches a SIP URI of the at least one client stored in the storage unit and the IP address of the at least one client included in the received SIP message matches an IP address of the at least one client stored in the storage unit when the result of the analysis and the SIP message received after the analysis are compared; and
set valid time during which information stored in the storage unit is usable in a case of which it is judged that the SIP URI and the IP address of the at least one client included in the received SIP message respectively match the SIP URI and the IP address of the at least one client stored in the storage unit.

5. The SIP server according to claim 1, being further configured to:
judge whether the received SIP message is INVITE when the result of the analysis and the SIP message received after the analysis are compared;
judge whether information stored in the storage unit is usable in a case of which the received SIP message is INVITE; and
rewrite the SIP message, and change the transfer destination based on the information stored in the storage unit, in a case of which it is judged that the information stored in the storage unit is usable.

6. The SIP server according to claim 5, being further configured to:
judge whether a service currently used by the at least one client which has transmitted the SIP message is capable of using the information stored in the storage unit when whether the information stored in the storage unit is usable is judged; and
permit use of the information stored in the storage unit in a case of which it is judged that the service currently used by the at least one client which has transmitted the SIP message is capable of using the information stored in the storage unit.

7. The SIP server according to claim 5, being further configured to judge whether the received SIP message is REGISTER, wherein:
the storage unit for storing the result of the analysis stores hold time of the result of the analysis calculated based on information contained in the REGISTER as the result of the analysis in a case of which it is judged that the received SIP message is REGISTER;
the SIP server is further configured to:
judge whether the SIP message received after the analysis has been received within the hold time and within valid time during which information stored in the storage unit is usable, when whether the information stored in the storage unit is usable is judged; and
permit use of the information stored in the storage unit in a case of which it is judged that the SIP message received after the analysis has been received within the hold time and within the valid time.

8. A communication system, comprising:
a SIP server for controlling a communication session of a client; and
a communication line for interconnecting the client and the SIP server, wherein:
the client and the SIP server transmit and receive a SIP message to establish the communication session; and
the SIP server is configured to:
receive the SIP message transmitted from the client;
transfer the received SIP message to one of another SIP server and another client; and
analyze the received SIP message;
the SIP server includes a storage unit for storing a result of the analysis; and
the SIP server is further configured to:
compare the result of the analysis and a SIP message received after the analysis;
rewrite the SIP message based on a result of the comparison; and
change a transfer destination of the SIP message based on the result of the comparison.

9. The communication system according to claim 8, wherein the SIP server is further configured to:
judge whether an IP address included in the received SIP message is a mobile IP when the result of the analysis and the SIP message received after the analysis are compared; and
set valid time during which information stored in the storage unit is usable in a case of which it is judged that the IP address contained in the received SIP message is a mobile IP.

10. The communication system according to claim 8, wherein the SIP server is further configured to:
judge whether a SIP URI included in the received SIP message matches a specific pattern when the result of the analysis and the SIP message received after the analysis are compared; and
set valid time during which information stored in the storage unit is usable in a case of which it is judged that the SIP URI contained in the received SIP message matches the specific pattern.

11. The communication system according to claim 8, wherein:
the storage unit for storing the result of the analysis stores a SIP URI and an IP address of the client included in the SIP message as the result of the analysis; and
the SIP server is further configured to:
judge whether the SIP URI of the at least one client included in the received SIP message matches a SIP URI of the client stored in the storage unit and the IP address of the client of the at least one client included in the received SIP message matches an IP address of the at least one client stored in the storage unit when the result of the analysis and the SIP message received after the analysis are compared; and
set valid time during which information stored in the storage unit is usable in a case of which it is judged that the SIP URI and the IP address of the at least one client included in the received SIP message respectively match the SIP URI and the IP address of the at least one client stored in the storage unit.

12. The communication system according to claim 8, wherein the SIP server is further configured to:
judge whether the received SIP message is INVITE when the result of the analysis and the SIP message received after the analysis are compared;
judge whether information stored in the storage unit is usable in a case of which it is judged that the received SIP message is INVITE; and
rewrite the SIP message, and change the transfer destination based on the information stored in the storage unit, in a case of which it is judged that the information stored in the storage unit is usable.

13. The communication system according to claim 12, wherein the SIP server is further configured to:
judge whether a service currently used by the client which has transmitted the SIP message is capable of using the information stored in the storage unit when whether the information stored in the storage unit is usable is judged; and
permit use of the information stored in the storage unit in a case of which it is judged that the service currently used by the at least one client which has transmitted the SIP message is capable of using the information stored in the storage unit.

14. The communication system according to claim 12, wherein:
the SIP server is further configured to judge whether the received SIP message is REGISTER;
the storage unit for storing the result of the analysis stores hold time of the result of the analysis calculated based on information contained in the REGISTER as the result of the analysis in a case of which it is judged that the received SIP message is REGISTER; and
the SIP server is further configured to:
judge whether the SIP message received after the analysis has been received within the hold time and within valid time during which information stored in the storage unit is usable, when whether the information stored in the storage unit is usable is judged; and
permit use of the information stored in the storage unit in a case of which it is judged that the SIP message received after the analysis has been received within the hold time and within the valid time.
